# EUROPÄISCHE PATENTSCHRIFT

(11) **EP 2 480 583 B1**
(45) Veröffentlichungstag und Bekanntmachung des Hinweises auf die Patenterteilung: **20.11.2013**
(21) Anmeldenummer: 10747030.4
(22) Anmeldetag: 26.08.2010
(51) Int. Cl.: C08G 18/10, C08G 18/12, C08G 18/42, C08G 18/48, C08G 18/76, C08J 9/14, C08L 75/04, C08L 71/02, C08G 65/336, C08G 101/00

(54) **MONOMERARME POLYURETHANSCHÄUME**
POLYURETHANE FOAMS HAVING LOW MONOMER CONTENT
MOUSSES DE POLYURÉTHANE À FAIBLE TENEUR EN MONOMÈRES

(30) Priorität: 25.09.2009 DE 102009045027
(43) Veröffentlichungstag der Anmeldung: 01.08.2012
(73) Patentinhaber: Henkel AG & Co. KGaA, 40589 Düsseldorf (DE)
(72) Erfinder: FRANKEN, Uwe, 41542 Dormagen (DE); KREBS, Michael, 40724 Hilden (DE); SEBESTIAN, Milan, 41515 Grevenbroich (DE)
(86) Internationale Anmeldenummer: PCT/EP2010/062435
(87) Internationale Veröffentlichungsnummer: WO 2011/036018

(56) Entgegenhaltungen:
- WO-A1-02/079292
- DE-A1- 10 108 445
- DE-A1- 10 347 659

## Beschreibung

Die Erfindung betrifft monomerarme Ein-Komponenten-Polyurethanschäume. Dabei werden lagerstabile vernetzbare Schaumvorläufer beschrieben, die eine hohe Reaktivität aufweisen und bei der Anwendung eine gute Ausbildung des Schaummaterials ergeben.

Einkomponenten PUR Schäume werden hauptsächlich für das Dichten und Dämmen von Fugen im Bau- und Heimwerkerbereich eingesetzt. Bei solchen Anwendungen wird das Schaum-Produkt aus einer Aerosoldose appliziert und zum Beispiel zum Einbau von Tür- und Fensterrahmen in Gebäuden verwendet. Um die Fugen zwischen Rahmen und Wand auszuschäumen, ist es notwendig, dass die anfängliche Viskosität des Schaums niedrig genug ist, um eine ausreichend Expansion des Schaums in der Fuge sicherzustellen. Der Einkomponenten- PUR Schaum wird durch die Vernetzungsreaktionen mit Feuchtigkeit fest.

Moderne PUR Schaumzusammensetzungen umfassen normalerweise ein Prepolymer, welches aus einer Isocyanat- und einer Polyolkomponente gebildet wird. Ein hoher Gehalt an monomeren Diisocyanaten ist notwendig gewesen, um einen Polyurethanschaum mit ausreichender Festigkeit und niedriger Viskosität zu erzeugen. Die niedrigere Viskosität ermöglicht eine gute Schäumbarkeit und Füllbarkeit der Fuge, sowie ein zufriedenstellendes Dosieren aus der Dose bei Normaltemperatur. Außerdem trägt das monomere Diisocyanat bei herkömmlichen Schäumen auch bedeutend zur Reaktionsfähigkeit des Schaums bei. Deshalb haben Einkomponentenschäume bis heute einen bedeutenden Gehalt an monomeren Diisocyanaten.

Das verursacht Probleme bei der Verarbeitung in der Weise, dass während des Ausbringens (Ausschäumens) des Inhaltes aus der Aerosoldose flüchtige monomere Diisocyanate in die Arbeitsatmosphäre abgegeben werden. Das ist im Hinblick auf die gesundheitsschädliche Wirkung der monomeren Isocyanate zu vermeiden. Dadurch ergeben sich Einschränkungen in der Anwendung nicht monomerarmer PU-Schäume.

In der WO 02/079292 werden Klebstoffpolymere beschrieben, die ein Prepolymer aus einer Isocyanatkomponente, einem Polyol und einer niedrigviskosen nicht mit Isocyanaten und OH-Gruppen reaktiven Komponente enthalten. Dabei sollen die monomeren Diisocyanate in der Zusammensetzung weniger als 2 % betragen. Als nicht-reaktive niedrigviskose Komponente werden Phosphatsäureester, Adipinsäureester oder Phthalsäureester beschrieben.

Weiterhin ist die WO 02/090410 bekannt. Diese beschreibt ein Prepolymer, das erhalten werden kann durch Umsetzung eines Polyols mit einer Funktionalität von < 3, einer Isocyanatkomponente mit einer Funktionalität von 2 bis 2,7, sowie einem niedrigmolekularen einwertigen Alkohol. Aus diesem Prepolymer sollen PU-Schäume hergestellt werden. Als Polyolkomponente werden eine Liste von Polyetherpolyolen, Polyesterpolyolen, Polycaprolactonpolyolen aufgezählt. Es werden in der praktischen Umsetzung jedoch nur Polyetherpolyole und niedrigmolekulare Ethylenglykole beschrieben.

Weiterhin ist die WO 2005/054324 bekannt. Diese beschreibt Prepolymerzusammensetzungen zur Erzeugung von PU-Schäumen, wobei Polyisocyanate und Polyole enthalten sein können. Das Prepolymer wird durch Reaktion von asymmetrischen Polyisocyanaten mit sterisch gehinderten Polyolen mit wenigstens zwei OH-Funktionen erhalten. Eine nähere Beschreibung der Polyole führt aus, dass insbesondere sterisch gehinderte Polyethylenglykole mit Propylenoxidendgruppen oder Polypropylenglykole eingesetzt werden können.

Es ist bekannt, dass aus PU-Prepolymeren basierend auf Polyetherpolyolen Schäume hergestellt werden können. Diese weisen gute Eigenschaften auf. Werden diese monomerarm eingestellt, ist die Viskosität jedoch so hoch, dass diese Produkte häufig nur mit weiteren verdünnenden Substanzen, wie Weichmachern oder Lösemitteln eingesetzt werden können. Weichmacher oder Lösemittel sind nachteilig für die Gesundheit bei der Verarbeitung. Weiterhin können sie aus dem vernetzten Schaum diffundieren, so dass die Haftung zu den Substraten negativ beeinflusst wird.

Auch Polyesterpolyolprepolymere können in Schaummaterialien eingesetzt werden. Dabei zeigt sich ebenso, dass in diesen Fällen die Vormaterialien eine hohe Viskosität haben. Dieser Effekt wird auch bei monomerarmen Prepolymeren verstärkt. Diese sind deshalb nicht als monomerarme Komponente in Schäumen einzusetzen. Außerdem hat sich gezeigt, dass PU-Schäume mit nur geringen Anteilen an Isocyanatgruppen oder monomeren Isocyanaten keine ausreichende mechanische Festigkeit als vernetzter Schaum aufweisen.

Die Nachteile der einzelnen PU-Prepolymere führen zusammen mit der unter Arbeitsschutzbedingungen notwendigen Reduzierung der Isocyanatmonomere zu Prepolymeren, die nicht oder nur zusammen mit weiteren niedermolekularen Lösemitteln verarbeitet werden können. Deswegen ergibt sich die Aufgabe, monomerarme PU-Prepolymere bereitzustellen, die über NCO-Gruppen vernetzen können, die keine Lösemittel oder Weichmacher enthalten, die aber eine ausreichend niedrige Viskosität aufweisen, um als Schaummaterialien in reaktiven Schäumen eingesetzt zu werden. Weiterhin sollen die daraus entstehenden vernetzen Polymerschäume mechanische Eigenschaften aufweisen, die mit den in der Vergangenheit bekannten Schaummaterialien erzielt werden können, die hohe Anteile von monomeren Isocyanaten enthalten.
1. Die Aufgabe wird gelöst durch eine vernetzbare schäumbare Zusammensetzung mit niedrigem Gehalt an monomeren Isocyanaten enthaltend
   a) 10 bis 90 Gew-% eines Prepolymeren aus Polyesterdiolen umgesetzt mit einem Überschuss an Diisocyanaten und nachfolgender Entfernung des überschüssigen monomeren Diisocyanats,
   b) 90 bis 10 Gew-% einer Komponente auf Basis von Polyetherdiolen, die entweder mindestens eine Si(OR)₃-Gruppe mit -OR ausgewählt aus Methoxy-, Ethoxy, Propoxy-, Butoxy- oder mindestens eine NCO-Gruppen aufweist,
   c) 0,1 bis 30 Gew-% Additive,
   d) mindestens ein Treibmittel,
   wobei die Polyesterdiole und die Polyetherdiole eine Molmasse ( M_{N} ) unter 5000 g/mol aufweisen und die Mischung aus a und b einen Gehalt an monomeren Diisocyanaten unter 2 Gew-% enthält, und insbesondere die Polyesterprepolymere und die Polyetherprepolymere bevorzugt eine Molmasse ( M_{N} ) unter 5000 g/mol aufweisen.

Ein notwendiger Bestandteil der erfindungsgemäßen Zusammensetzung sind Prepolymere auf Basis von Polyestern (a). Diese sind durch Reaktion von Polyester-polyolen mit Diisocyanaten herstellbar. Geeignete Polyesterpolyole sind Umsetzungsprodukte von polyfunktionellen, vorzugsweise difunktionellen Alkoholen, gegebenenfalls zusammen mit geringen Mengen an trifunktionellen Alkoholen, und polyfunktionellen, vorzugsweise difunktionellen und/oder trifunktionellen Carbonsäuren. Anstatt freier Polycarbonsäuren können auch die entsprechenden Polycarbonsäureanhydride oder entsprechende Polycarbonsäureester mit Alkoholen mit vorzugsweise 1 bis 3 C-Atomen eingesetzt werden. Zur Herstellung derartiger Polyesterpolyole geeignete Diole sind beispielsweise Ethylenglykol, 1,2 oder 1,3- Propandiol, 1,2-oder 1,4-Butandiol, Pentandiol, die isomeren Hexandiole, Octandiol, 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol oder Polybutylenglykol. Es können auch aromatische Diole eingesetzt werden.

Die eingesetzten Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Glutarsäureanhydrid, Maleinsäure, Maleinsäureanhydrid, Fumarsäure, Dimerfettsäure oder Gemische aus zwei oder mehr davon geeignet. Als Tricarbonsäuren, die gegebenenfalls anteilig enthalten sein können sind beispielsweise Zitronensäure oder Trimellithsäure geeignet. Alle genannten Säuren können einzeln oder als Gemische aus zwei oder mehr davon eingesetzt werden.

Dem Fachmann sind solche OH-funktionelle Polyester bekannt und sie sind kommerziell erhältlich. Insbesondere geeignet sind drei oder insbesondere zwei endständige OH-Gruppen aufweisende Polyesterpolyole.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäureenthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden.

Polyesterpolyole weisen bevorzugt ein Molmasse von ca. 200 bis 5 000 g/mol auf, insbesondere unter 2000 g/mol (zahlenmittlere Molmasse, M_{N}, gemessen durch GPC). Insbesondere sind auch Polyesterpolyole geeignet, die aromatische Strukturen enthalten.

Ein notwendiger Bestandteil der erfindungsgemäßen Zusammensetzung ist ein Polyesterdiol.

Als Isocyanate zur Herstellung der NCO-haltigen Prepolymere sind die bekannten aliphatischen oder aromatischen Diisocyanate geeignet. Diese haben eine Molmasse unter 500g/mol. Als Diisocyanate können beispielsweise eingesetzt werden Ethylendiisocyanat, 1,4-Tetramethylendüsocyanat, 1,4-Tetramethoxybutandüsocyanat, 1,6-Hexamethylendiisocyanat (HDI), Cyclobutan-1,3-düsocyanat, Cyclohexan-1,3- und -1,4-düsocyanat, Bis(2-isocyanato-ethyl)fumarat, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3-oder -1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendiisocyanat (XDI), Tetramethylxylylendüsocyanat (TMXDI), 1,3- und 1,4-Phenylendiisocyanat, 2,4- oder 2,6-Toluylendiisocyanat (TDI) oder Isomerengemische des TDI, 2,4'-Diphenylmethandiisocyanat, 2,2'-Diphenylmethandiisocyanat oder 4,4'-Diphenylmethandiisocyanat (MDI) sowie deren Isomerengemische. Weiterhin kommen partiell oder vollständig hydrierte Cycloalkylderivate des MDI, beispielsweise vollständig hydriertes MDI (H12-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate. Bevorzugt sollen aromatische Diisocyanate eingesetzt werden, ganz besonders bevorzugt MDI.

Eine andere Ausführungsform setzt asymmetrische Isocyanate ein, die NCO-Gruppen mit einer unterschiedlichen Reaktivität gegenüber Diolen besitzen. Beispiele für geeignete cycloaliphatische asymmetrische Diisocyanate sind z.B. 1-Isocyanato methyl-3-isocyanato-1,5,5-trimethyl-cyclohexan (Isophorondiisocyanat, IPDI), 1-Methyl-2,4-diisocyanato-cyclohexan, 1,4-Diisocyanato-2,2,6-trimethylcyclohexan (TMCDI), oder Hydrierungsprodukte der vorgenannten aromatischen Diisocyanate, beispielsweise hydriertes MDI in isomerenreiner Form, bevorzugt hydriertes 2,4'-MDI. Beispiele für bevorzugt geeignete aromatische asymmetrische Diisocyanate sind 2,4- oder 2,6-Toluylendiisocyanats (TDI), entweder in isomerenreiner Form oder als Mischung mehrerer Isomerer, Naphthalin-1,5-diisocyanat (NDI), Diphenylmethan-2,4'-diisocyanat (MDI) sowie Mischungen des 4,4'-Diphenylmethandi-isocyanats mit dem 2,4'-MDI-Isomeren.

Eine Ausführungsform setzt die Polyole mit einem Überschuss eines Diisocyanats um. Nicht reagierende Anteile des Isocyanates werden anschließend im Vakuum als Monomer wieder abdestilliert. Eine andere Ausführungsform setzt ein asymmetrisches Isocyanat ein, dabei kann bei einer geeigneten Reaktionsführung auf eine Destillation verzichtet werden.

Die Reaktion der monomeren Diisocyanate mit den Polyolen erfolgt bei einer Temperatur zwischen 20°C bis 100°C, bevorzugt zwischen 25 bis 80°C und insbesondere bevorzugt zwischen 40 bis 75°C. Die Mengen werden so gewählt, dass eine NCO-terminiertes Prepolymer erhalten wird. Durch die Reaktionsführung ist sicherzustellen, dass monomerarme Produkte erhalten werden. Die Umsetzung der Polyesterpolyole kann nach den bekannten Verfahren erfolgen. Es sollen niedrige Gehalte an monomeren Isocyanaten erhalten werden, beispielsweise unter 2 Gew-%, insbesondere unter 1 Gew.-%. Durch das gewählte Verhältnis von Diol und Diisocyanat kann erreicht werden, dass kein wesentlicher Molekulargewichtsaufbau der Prepolymere erhalten wird.

Ein weiterer Bestandteil für eine erfindungsgemäße Zusammensetzung sind NCO-Gruppen haltige Prepolymere auf Basis von Polyethern (b). Diese werden beispielsweise hergestellt durch Umsetzung von Polyetherpolyolen mit Isocyanaten im stöchiometrischen Überschuss.

Geeignete Polyetherpolyole sind beispielsweise Umsetzungsprodukte niedermolekularer polyfunktioneller Alkohole mit Alkylenoxiden. Die Alkylenoxide weisen vorzugsweise 2 bis 4 C-Atome auf. Geeignet sind beispielsweise die Umsetzungsprodukte von Ethylenoxid, Propylenoxid, Butylenoxid oder Gemische davon mit aliphatischen Diolen, wie Ethylenglykol, 1,2-Propandiol, 1,3-Propandiol, den isomeren Butandiolen, Hexandiolen, 2,2-Dimethyl-1,3-propandiol, 2-Methylpropandiol, 1,6-Hexandiol, 2,4,4-Trimethylhexandiol-1,6, 2,2,4- Trimethylhexandiol-1,6, 1,4-Cyclohexandimethanol, oder aromatischen Diolen, wie 4,4'-Dihydroxy-diphenylpropan Bisphenols A, Bisphenols F, Brenzkatechins, des Resorcins, des Hydrochinons oder Gemischen aus zwei oder mehr davon. Ferner sind auch die Umsetzungsprodukte polyfunktioneller Alkohole, wie Glycerin, Trimethylolethan oder Trimethylolpropan, Pentaerythrit oder Zuckeralkohole mit den Alkylenoxiden geeignet. Weitere, im Rahmen der Erfindung geeignete Polyole, entstehen durch Polymerisation von Tetrahydrofuran (Poly-THF).

Die Polyetherpolyole werden in dem Fachmann bekannter Weise hergestellt und sind kommerziell erhältlich. Es sollen erfindungsgemäß niedermolekulare Polyether ausgesucht werden. Insbesondere geeignet sind beispielsweise Polyetherpolyole mit einer Molmasse von 200 bis 5 000 g/mol, insbesondere bis 3 000 vorzugsweise 300 bis 1500 g/mol. Ein notwendiger Bestandteil der erfindungsgemäßen Zusammensetzung ist ein Polyetherdiol. Insbesondere sind Diole geeignet, wie Homopolymere des Polyethylenglykols, Propylenglykols, Block- oder statistische Copolymere aus Ethylenglykol und Propylenglykol, insbesondere solche, die sekundäre Hydroxylgruppen enthalten.

Diese Polyetherpolyole können wie oben bereits für die Prepolymere (a) beschrieben, mit bekannten Isocyanaten zu NCO-haltigen Prepolymeren umgesetzt werden.

Diese Prepolymere sollen monomerarm sein. Das kann durch die Syntheseführung erzielt werden, eine andere Verfahrensweise trennt freie monomere Isocyanate durch Destillation ab. Die Polyetherprepolymeren sollen mindestens eine NCO-Gruppe in den Ketten enthalten, bevorzugt zwei oder drei NCO-Gruppen. Bei Mischungen von Prepolymeren sind auch mittlere Funktionalitäten von beispielsweise 1,8 bis 3,3 möglich.

Die Polyetherprepolymere haben im monomerarmen Zustand eine Viskosität von 3000 bis 50000 mPas bei 50°C ( gemessen Brookfield, EN ISO 2555 ). Der Monomergehalt soll unter 2 Gew.-% betragen bevorzugt unter 1 %, insbesondere unter 0,2 %. Ganz besonders bevorzugt werden Prepolymere eingesetzt, die nur einen geringen Molekulargewichtsaufbau bei der Herstellung ergeben haben. So soll die Polydispersität D (gemessen als M_{W}/M_{N}) weniger als 3,0, insbesondere unter 2,5, bevorzugt weniger als 2,0 betragen.

Eine unterschiedliche Ausführungsform der Erfindung setzt Polyetherprepolymere (b) ein, die mindestens eine Alkoxysilangruppe aufweisen, vorzugsweise zwei oder drei Alkoxygruppen, die sich insbesondere endständig an der Polymerkette befinden. Das Polymergrundgerüst kann aus den oben angegebenen Polyetherbausteinen bestehen, die an der Kette Alkoxysilangruppen anreagiert aufweisen. Solche Silanterminierten Polyether sind beispielsweise durch Umsetzung von NCO-terminierten Polyethern mit solchen Alkoxysilanen herstellbar, die zusätzlich noch eine mit NCO reaktive Gruppe aufweisen, beispielsweise sekundäre Aminosilane oder Hydroxysilane. Eine andere Herstellungsweise stellt solche Polymere durch Umsetzung von mit Doppelbindungen terminiertem Polyether her, die danach einer Hydrosilylierung unterworfen werden. Solche silanterminierten Polyether mit einer Molmasse unter 10000 g/mol sind dem Fachmann bekannt und kommerziell erhältlich. Diese Polyetherpolymere sollen keine freien OH-Gruppen aufweisen, die mit den NCO-Gruppen der anderen Prepolymere reagieren können. Insbesondere sind solche Prepolymere mit einem Molmasse unter 5 000 g/mol geeignet, bevorzugt von 500 bis 3000 g/mol. Die Polydispersität soll gering sein, beispielsweise kleiner 2,0, insbesondere unter 1,7.

Die erfindungsgemäße Zusammensetzung als Schaumvorläufer muss mindestens ein Prepolymer auf Basis von Polyestern enthalten. Die Menge soll zwischen 10 bis 90 Gew.-% bezogen auf die gesamten nicht flüchtigen Anteile enthalten, ohneTreibmittel, insbesondere zwischen 20 bis 60 Gew.-% Polyesterprepolymer. Weiterhin muss die erfindungsgemäße Zusammensetzung ein Polyetherprepolymer enthalten in der Menge von 90 bis 10 Gew.-%, insbesondere zwischen 40 bis 80 Gew.-%. Dabei ist es möglich die Prepolymere einzeln herzustellen und zu mischen oder im Fall von NCO-vernetzenden Prepolymeren als Gemisch zu synthetisieren. Dabei können Polyetherpolyole oder Polyesterpolyole unterschiedlicher Molmassen eingesetzt werden. Wird die Menge der Polyetherprepolymere zu hoch gewählt, ist eine Brandbeständigkeit des fertig geschäumten und vernetzten Produktes schlechter. Wird der Anteil der Polyetherprepolymere zu gering gewählt, ist keine ausreichend niedrige Viskosität des Schaumvorläufers zu erzielen. Die Viskosität der Mischung der Komponenten a und b soll zwischen 2 000 bis 150 000 mPas betragen gemessen bei 50°C, insbesondere 10 000 bis 100 000. Dabei kann eine Ausführungsform Polyesterprepolymere zusammen mit NCO-Polyetherprepolymeren aufweisen, eine andere Ausführungsform setzt als Polyetherprepolymer mindestens einen Silanfunktionalisierten Polyether ein. Die Mischung der Prepolymere a und b weist einen Gehalt an monomeren Diisocyanaten von weniger als 2 % auf, bevorzugt weniger als 1 %, insbesondere weniger als 0,2 %.

Weiterhin kann die erfindungsgemäße Zusammensetzung als Schaumvorläufer auch für die Schaumherstellung bekannte Additive enthalten. Es kann sich dabei beispielsweise um Weichmacher, Stabilisatoren, Haftvermittler, Katalysatoren, Flammschutzmittel, Biozide, Zellöffner und ähnliche Zusatzstoffe handeln. Dabei ist es zweckmäßig den Anteil von nicht im Polymer anreagierten Bestandteilen, wie Weichmacher oder Lösemitteln möglichst gering zu halten.

Weichmacher können in dem Schaumvorläufer bis zu 40 Gew.-% enthalten sein, insbesondere auch keine Weichmacher oder zwischen 0,5 und 20 Gew.-% bezogen auf die Gesamtzusammensetzung. Es werden Weichmacher mit polaren Gruppen bevorzugt. Geeignete Weichmacher sind dem Fachmann bekannt und kommerziell erhältlich.

Stabilisatoren im Sinne dieser Erfindung sind Antioxidantien, UV-Stabilisatoren, Hydrolyse-Stabilisatoren oder Schaumstabilisatoren zu verstehen. Beispiele hierfür sind die handelsüblichen sterisch gehinderten Phenole und/oder Thioether und/oder substituierten Benzotriazole und/oder Amine vom "HALS"-Typ (Hindered Amine Light Stabilizer). Es ist im Rahmen der vorliegenden Erfindung bevorzugt, wenn ein UV-Stabilisator eingesetzt wird, der eine Silylgruppe trägt und beim Vernetzen bzw. Aushärten in das Endprodukt eingebaut wird. Ferner können auch Benzotriazole, Benzophenone, Benzoate, Cyanacrylate, Acrylate oder sterisch gehinderte Phenole zugegeben werden. Beispiele für Schaumstabilisatoren sind Polyethersiloxane, wie Copolymerisate aus Ethylenoxid und Propylenoxid verbunden mit einem Polydimethylsiloxanrest, über Allophanatgruppen verzweigte Polysiloxan-Polyoxyalkylen-Copolymere, andere Organospolysiloxane, wie Dimethylpolysiloxane; oxyethylierte Alkylphenole, oxyethylierte Fettalkohole, und/oder Paraffinöle. Zur Verbesserung der Emulgierwirkung, der Zellstruktur und/oder zu deren Stabilisierung eignen sich ferner oligomere Polyacrylate mit Polyoxyalkylen- und Fluoralkanresten als Seitengruppen. Die erfindungsgemäßen schäumbaren Mischungen können Schaumstablisatoren z.B. in Mengenbereichen zwischen 0,1 und 5 Gew.% enthalten, bezogen auf die Mischung, der nicht flüchtigen Anteile.

Bei Bedarf können als Haftvermittler vorzugsweise organofunktionelle Silane wie hydroxyfunktionelle, (meth)acryloxyfunktionelle, mercaptofunktionelle, aminofunktionelle oder epoxyfunktionelle Silane verwendet. Die Mengen können von 0 bis 20 Gew.% betragen, vorzugsweise zwischen 0 und 5 Gew.%, bezogen auf die Mischung.

Es können auch Katalysatoren enthalten sein. Als Katalysatoren können alle bekannten Verbindungen eingesetzt werden, die Isocyanatreaktionen katalysieren können. Beispiele hierfür sind Titanate wie Tetrabutyltitanat und Tetrapropyltitanat, Zinncarboxylate wie Dibutylzinndilaulat (DBTL), Dibutylzinndiacetat, Zinnoctoat; Zinnoxide wie Dibutylzinnoxid, und Dioctylzinnoxid; Organoaluminumverbindungen wie Aluminumtrisacetylacetonat, A-luminumtrisethylacetoacetat; Chelatverbindungen wie Titantetraacetylacetonat; Aminverbindungen wie Triethylenediamin, Guanidin, Diphenylguanidin, 2,4,6-tris(dimethylaminomethyl)phenol, Morpholin, N-methylmorpholin, 2-Ethyl-4-methylimidazole, und 1,8-Diazabicyclo-(5,4,0)-undecen-7 (DBU), 1,4-Diazabicyclo[2,2,2]octan, N,N-Dimethylpiperazin, 1,8-Diazabicyclo[5.4.0]undec-7-en, Dimorpholinodimethylether, Dimorpholinodiethylether (DMDEE) oder deren Mischungen. Der Katalysator, bevorzugt Mischungen mehrerer Katalysatoren, werden in einer Menge von 0,01 bis etwa 5 Gew.-% bezogen auf das Gesamtgewicht der Zubereitung eingesetzt.

In einer anderen Ausführungsform enthält eine erfindungsgemäße schäumbare Mischung mindestens ein flüssiges Flammschutzmittel. Das Flammschutzmittel kann ausgewählt werden aus der Gruppe halogenierte (insbesondere bromierte) Ether vom Typ "Ixol" der Fa. Solvay, 3,4,5,6-tetrabromo-, 2-(2-hydroxyethoxy)ethyl-2-hydroxypropyl ester), organische Phosphate, insbesondere Diethyl-ethanphosphonat, Triethylphosphat, Dimethylpropylphosphonat, Diphenylkresylphosphat, sowie chlorierte Phosphate, insbesondere Tris-(2-chlorethyl)phosphat, Tris-(2-chlorisopropyl)phosphat, Tris(1,3-dichlorisopropyl)-phosphat, Tris-(2,3-dibrompropyl)phosphat und Tetrakis-(2-chlorethyl)-ethylendiphosphat oder deren Mischungen. Vorzugsweise enthält die Mischung das Flammschutzmittel in einer Menge von 1 bis 50 Gew.-%, besonders bevorzugt von 5 bis 20 Gew.-%, bezogen auf das Gesamtgewicht der Mischung. Es ist zweckmäßig aus den vorgenannten Flammschutzmitteln diejenigen auszuwählen, die keine Hydroxylgruppen aufweisen, da diese den Gehalt an reaktiven NCO-Gruppen vermindern.

Eine erfindungsgemäße schäumbare Zusammensetzung enthält neben dem Gemisch der Prepolymer mindestens ein Treibmittel. Als Treibmittel können prinzipiell eine Vielzahl leichtflüchtiger Kohlenwasserstoffe eingesetzt werden. Besonders bevorzugte Treibmittel werden ausgewählt aus Kohlenwasserstoffen und/oder Fluorkohlenwasserstoffen mit jeweils 1-5 Kohlenstoffatomen und/oder Dimethylether (DME) sowie deren Mischungen, beispielsweise aus DME / Propan / Isobutan / nButan. Die Treibmittel werden in Mengen von 5 bis 40 Gew.%, vorzugsweise von 10 bis 30 Gew.%, bezogen auf die gesamte schäumbare Mischung eingesetzt.

Eine bevorzugte Ausführungsform des erfindungsgemäßen Schaumvorläufers kann enthalten 10 bis 90 Gew-%, bevorzugt 30 bis 60 Gew-% eines Polyesterprepolymeren (a), 90 bis 10 Gew.-%, insbesondere 70 bis 40 Gew.-% Polyoxyalkylenprepolymere mit mindestens einer Isocyanatgruppen (b1) oder mit mindestens einer Silangruppen (b2), 0,5 bis 30 Gew-% Hilfsstoffe und Additive, insbesondere Katalysatoren, Flammschutzmittel und/oder Stabilisatoren. Die Gesamtheit dieser Bestandteile soll 100 Gew-% betragen. Zusätzlich enthält die erfindungsgemäße Mischung noch inerte Treibmittel.

Eine Ausführungsform verwendet Polymere, die Di- bzw. Trialkoxysilylgruppen enthalten, die ein Aushärten und gute Endfestigkeiten ermöglichen. Ein weiterer Vorteil solcher Alkoxygruppen enthaltenden Polymere ist darin zu sehen, das diese die Viskosität herabsetzen und ein Netzwerk ausbilden, so dass später keine Migration von nicht reagierenden Polymeren zu beobachten ist. Da die Vernetzung langsamer verläuft als die Vernetzung der NCO-Gruppen, wird der Aufbau des Netzwerks nicht gestört.

Die andere Ausführungsform arbeitet mit Gemischen aus NCO-vernetzenden Polyether- und Polyesterprepolymeren. Diese Mischungen reagieren gleichmäßig ab. Es hat sich gezeigt, dass die Mischungen solcher Prepolymere auch eine niedrige Viskosität aufweisen. Gleichzeitig ist eine hohe Reaktivität gegeben, wobei der Gehalt an monomeren Isocyanaten gering gehalten wird.

Ein weiterer Gegenstand der vorliegenden Erfindung ist ein Einweg-Druckbehälter enthaltend eine erfindungsgemäße schäumbare Mischung oder eine schäumbare Mischung, hergestellt nach einem erfindungsgemäßen Verfahren. Der Einweg-Druckbehälter (Aerosol-Dose) enthält also mindestens ein Polyesterprepolymer und ein Polyetherprepolymer, und mindestens ein Treibmittel. Um eine gute Verarbeitbarkeit der Mischung - insbesondere das Befüllen der Behälter - zu ermöglichen, beträgt die Viskosität der Mischung der nicht flüchtige Bestandteile erfindungsgemäß 2 000 bis 150.000 mPas, vorzugsweise 5000 bis 80.000 mPas (gemessen bei 50°C).

Die erfindungsgemäßen schäumbaren Mischungen härten nach dem Ausbringen aus der Aerosoldose durch Reaktion mit der umgebenden Luftfeuchtigkeit zu feinzelligen Schäumen aus, so dass die schäumbaren Mischungen zum Dichten, Dämmen und/oder Montieren, z.B. von Fugen, Dachflächen, Fenstern und Türen oder zum Ausfüllen von Hohlräumen geeignet sind.

Ein weiterer Gegenstand der vorliegenden Erfindung ist daher auch die Verwendung einer erfindungsgemäßen schäumbaren Mischung oder einer nach einem erfindungsgemäßen Verfahren hergestellten Mischung zum Dichten, Dämmen und/oder Montieren von Fugen, Dachflächen, Fenstern und Türen oder zum Ausfüllen von Hohlräumen.

Ein weiterer Gegenstand der Erfindung ist ein Verfahren zum Herstellen von schäumbaren, vernetzbaren Zusammensetzungen. Gemäß diesem Verfahren wird ein Prepolymer aus mindestens einem Polyesterdiol mit einem molaren Überschuss von einem aromatischen Diisocyanat hergestellt. Dabei kann dieser Überschuss ein Verhältnis von 1:2 bis 1: 10 umfassen. Nach der Reaktion wird das unreagierte monomere Diisocyanat abdestilliert auf einen Gehalt von weniger als 2 Gew.-% bezogen auf das Prepolymer bevorzugt unter 1 %, insbesondere weniger als 0,2.%. Dabei ist es möglich, das abdestillierte Diisocyanat wieder bei der Synthese der Prepolymere einzusetzen. Bei den besonders geeigneten Isocyanaten für das Verfahren handelt es sich um aromatische Isocyanate, wie 4,4-Diphenylmethandiisocyanat oder um Gemische der MDI-Isomeren, eine andere Ausführungsform setzt aromatische asymmetrische Isocyanate wie TDI, 2,4 MDI ein. Dabei kann der Überschuss an Diisocyanat geringer gewählt werden, beispielsweise ca. 1:2.

Zu diesem Prepolymeren kann ein weiteres mit Wasser vernetzbares Prepolymer zugegeben werden. Es kann sich dabei um NCO-terminierte Prepolymere auf Basis von Polyethern handeln. Diese können wie oben bereits angegeben, mit einem Überschuss an monomeren bevorzugt aromatischen Diisocyanaten hergestellt werden, wobei nach der Reaktion die zurückbleibenden monomeren Diisocyanate durch Destillation auf einen Gehalt von weniger als 2 %, insbesondere unter 0,2 %, abdestilliert werden. Das kann in einer separaten Synthesereaktion geschehen, es ist aber auch möglich, dass dieses PU-Prepolymer gemeinsam mit dem oben erwähnten Polyesterprepolymer hergestellt wird.

Eine andere Ausführungsform des Verfahrens arbeitet mit Polyetherpolymeren, die mindestens eine Silangruppe mit hydrolysierbaren Resten enthält. Als hydrolisierbare Reste sind solche vom Typ Si(OR)₃ mit -OR ausgewählt aus Methoxy-, Ethoxy-, Propoxy-, Butoxy, insbesondere aber bevorzugt ausgewählt aus Methoxy-, Ethoxy-, Propoxy-, eingesetzt werden. Insbesondere können solche Prepolymere auch zwei Silangruppen enthalten. Diese werden separat zu den NCO-Prepolymeren hergestellt.

Gemäß dem erfindungsgemäßen Verfahren wird eine Mischung unter wasserfreien Bedingungen aus dem Polyesterprepolymer und dem Polyetherpolymer hergestellt. Dazu können ggf. die Additive eingegeben werden, die in einer erfindungsgemäßen Zusammensetzung enthalten sein können. Weiterhin wird zu dieser Mischung mindestens ein Treibgas zugesetzt. Das kann durch Mischen der Prepolymer/Additivmischung mit Treibgas geschehen, wobei diese Mischung dann in die entsprechenden Einweg-Druckgebinde abgefüllt wird. Es ist ebenso möglich, die verschiedenen Prepolymere und Additive einzeln in den entsprechenden Behälter zu geben und die Treibgase danach zuzusetzen. Auf bekannte Art und Weise werden die Komponenten miteinander vermischt. Das Mischen der Komponenten kann auch durch Erwärmen unterstützt werden, so dass die Verarbeitungsprozesse schneller ablaufen. Es werden Mischungen, abgefüllt in Einweg-DruckBehältern erhalten. Diese sind über einen Zeitraum von mindestens 6 Monate lagerstabil, soweit unter wasserfreien Bedingungen gearbeitet wird.

Insbesondere zur Verwendung in einem erfindungsgemäßen Verfahren sind Zusammensetzungen geeignet, die den oben genannten erfindungsgemäßen vernetzbaren schäumbaren Zusammensetzungen entsprechen.

Die erfindungsgemäßen schäumbaren Zusammensetzungen sind insbesondere zur Verwendung als 1 K-Dosenschaum einzusetzen. Diese werden üblicherweise als Ortsschaum bezeichnet, d.h. sie werden zur Herstellung und Lagerung und Transport in Aerosoldosen gefüllt und unmittelbar bei der Anwendung ausgetragen und aufgeschäumt. Durch die erfindungsgemäße Zusammensetzung ist es möglich, Isocyanat-reaktive Polyurethanschäume herzustellen, die einen geringen Monomergehalt aufweisen. Diese weisen eine Zusammensetzung auf, die eine ausreichende Viskosität zeigt, um mit den bekannten Treibmitteln verschäumbar zu sein. Die erfindungsgemäßen Schaumvorläufer härten mit der vorhandenen Luftfeuchtigkeit aus und ergeben kleinzellige, mechanisch stabile Schäume. Durch besondere Ausgestaltung der Zusammensetzung ist es möglich, diese Schäume auch brandhemmend auszugestalten.

Durch den niedrigen Gehalt an freien Isocyanaten werden die Anforderungen im Bezug auf Arbeitssicherheit und Gesundheitsschutz erfüllt. Die technischen Anwendungseigenschaften der geschäumten Materialien sind im Vergleich zu bekannten Stand der Technik vergleichbar gut.

Die erfindungsgemäßen schäumbaren Mischungen härten nach dem Ausbringen aus der Aerosoldose mit der umgebenden Luftfeuchtigkeit zu feinzelligen Schäumen aus, so dass aus die schäumbare Mischungen zum Dichten, Dämmen und Montieren, z.B. von Fugen, Dachflächen, Fenstern und Türen oder zum Ausfüllen von Hohlräumen geeignet sind. Ein weiterer Vorteil der erfindungsgemäßen Zusammensetzung ist das verbesserte Brandverhalten der ausgehärteten Schäume.

### Beispiele: (Mengenangabe in Teilen)

| Versuch | Prepo1 | Prepo 2 | Prepo 3 | Versuch | Prepo1 | Prepo 2 | Prepo 4 | Prepo 5 |
|---|---|---|---|---|---|---|---|---|
| 1 | 100 | | 0 | 11 | | 100 | 0 | |
| 2 | 80 | | 20 | 12 | | 80 | 20 | |
| 3 | 50 | | 50 | 13 | | 50 | 50 | |
| 4 | 20 | | 80 | 14 | | 20 | 80 | |
| 5 | 0 | | 100 | 15 | | 0 | 100 | |
| 6 | | 100 | 0 | 16 | 100 | | 0 | |
| 7 | | 80 | 20 | 17 | 80 | | 20 | |
| 8 | | 50 | 50 | 18 | 50 | | 50 | |
| 9 | | 20 | 80 | 19 | 20 | | 80 | |
| 10 | | 0 | 100 | 20 | 0 | | 100 | |
| | | | | 21 | 100 | | | 0 |
| | | | | 22 | 80 | | | 20 |
| | | | | 23 | 50 | | | 50 |
| | | | | 24 | 20 | | | 80 |
| | | | | 25 | 0 | | | 100 |

### Ergebnis

| Viskosität [in mPas] | 30 °C | 50 °C | 80 °C |
|---|---|---|---|
| Beispiel 11a] | nicht messbar | 161 00 | 9200 |
| 2 | | 105 000 | 6350 |
| 3 | | 57 000 | 2850 |
| 4 | | 53 500 | 2450 |
| 5^{[a]} | | 44 000 | 1850 |
| 6^{[a]} | nicht messbar | 450000 | 10200 |
| 7 | | 257000 | 6800 |
| 8 | | 105000 | 3500 |
| 9 | | 81000 | 2700 |
| 10^{[a]} | | 44000 | 1800 |
| 11^{[a]} | nicht messbar | 450000 | 10500 |
| 12 | | 202000 | 5600 |
| 13 | | 57000 | 3000 |
| 14 | | 20000 | 1200 |
| 15^{[a]} | | 8000 | 800 |
| 16^{[a]} | nicht messbar | 161000 | 9200 |
| 17 | | 116000 | 6800 |
| 18 | 595000 | 19600 | 1700 |
| 19 | 210000 | 15200 | 1300 |
| 20^{[a]} | | 8000 | 800 |
| 21^{[a]} | nicht messbar | 16100 | 9200 |
| 22 | | 2100 | 1050 |
| 23 | 2200 | 1100 | 450 |
| 24 | 540 | 150 | 60 |
| 25^{[a]} | 200 | 20 | 10 |

| | | | |
|---|---|---|---|
| [a] nichterfindungsgemäße Beispiele | | | |

### Polyester A bestehend aus Adipinsäure/Isophthalsäure/ Propylenglykol/ Diethylenglykol

| | |
|---|---|
| Viskosität bei 25°C: 1.350 mPa*s | OHZ: 135 |

### Polyester B bestehend aus Adipinsäure/Phthalsäure/1,2-Propandiol/ Diethylenglykol

| | |
|---|---|
| Viskosität bei 25°C: 3.000 mPa*s | OHZ: 190 |

| | |
|---|---|
| PPG 400 | Polypropylenglykol 400 (Lupranol 400 / BASF) OHZ: 256 |
| PPG 750 | Gemisch aus Polypropylenglykol 400 und 1000 (Voranol 1010 L / Dow) OHZ: 145 |
| | |
| MDI | 4,4'-Diphenylmethandiisocyanat (Desmodur 44 M / Bayer) |
| MIS | Gemisch aus 2,4' und 4,4'- Diphenylmethandiisocyanat (Desmodur 2460 MI) |

Aus den Diolen wird mit einem Überschuss ein Diisocyanat (Molverhältnis 6 :1) ein Prepolymer hergestellt. Dieses wird nach Ende der Reaktion mittels eines Dünnschichtverdampfers im Vakuum von nicht reagiertem monomeren Isocyanat befreit. Der Restmonomergehalt einer jeden Probe ist kleiner als 1 Gew.-% monomeres MDI.
Prepo 1 : Polyester A + 4,4-MDI
Prepo 2 : Polyester B + 4,4-MDI
Prepo 3 : PPG 400 + MIS
Prepo 4 : PPG 750 + MIS
Prepo 5 : Silyl-terminierter Polyether (Polypropylene glycol-bis- [3-(dimethoxymethylsilyl)-propyl]ether

Es zeigt sich, dass die Viskosität der Prepolymere nicht linear mit dem zunehmenden Anteil an Polyesterprepolymer ansteigt, das Viskositätsverhalten wird durch die Zugabe von Polyetherprepolymere synergistisch zu geringem Werten beeinflusst.

Aus den Beispielen 3, 8, 13, 18 werden durch Zugabe einer Mischung von Propan/Dimethylether (1:1) Gew.-Anteil 30 % auf die Gesamtmischung schäumbare Mischungen hergestellt. Diese Mischungen werden in einer Einweg-Druckdose eingefüllt. Die Mischungen werden durch Schütteln homogenisiert und für einen Tag gelagert. Es zeigt sich, dass die Mischungen als Schaum gut auszubringen sind. Sie vernetzen schnell.

Analoge Mischungen mit 30 % der Treibmittelmischung werden von den Versuchen 1, 6, 11, 16 hergestellt. Das Abfüllen in die Druckdosen muss bei erhöhter Temperatur erfolgen. Nach Abkühlung und Lagerung für 24 Stunden ist nur ein schlechtes Austreten von Schaum aus der Druckdose festzustellen. Die Menge ist gering. Ein Aufschäumen gelingt nicht zu einem homogenen Schaum. Es tritt kein gleichmäßiger Schaum aus der Dose aus, offensichtlich ist keine homogene Mischung in der Dose vorhanden. Diese Mischungen sind nicht als schäumbare Zusammensetzung einzusetzen.

Es werden weitere Versuche mit Additiven durchgeführt. Diese beeinflussen die Schäumbarkeit nicht wesentlich.
Beispiel 3 + 0,05 % DMDEE als Katalysator
Beispiel 8 + 0,4 % Paraffinöl
Beispiel 13 + 0,2 % UV-Stabilisator
Beispiel 18 + 5% Trichlor-isopropylphosphat

## Patentansprüche

1. Vernetzbare schäumbare Zusammensetzung mit niedrigem Gehalt an monomeren Isocyanaten enthaltend
a) 10 bis 90 Gew-% eines Prepolymeren aus Polyesterdiolen umgesetzt mit einem Überschuss an Diisocyanaten und nachfolgender Entfernung des überschüssigen monomeren Diisocyanats,
b) 90 bis 10 Gew-% einer Komponente auf Basis von Polyetherdiolen, die entweder mindestens eine Si(OR)₃-Gruppe mit -OR ausgewählt aus Methoxy-, Ethoxy-, Propoxy-, Butoxy- oder mindestens eine NCO-Gruppe aufweist,
c) 0,1 bis 30 Gew-% Additive,
d) mindestens ein Treibmittel,
wobei die Polyesterdiole und die Polyetherdiole eine zahlenmittlere Molmasse ( M_{N} ) unter 5000 g/mol aufweisen und die Mischung aus a und b einen Gehalt an monomeren Diisocyanaten unter 2 Gew-% enthält.

2. Zusammensetzung nach Anspruch 1, **dadurch gekennzeichnet, dass** der NCO-Monomergehalt der Zusammensetzung unter 1 Gew-% beträgt und der NCO-Gehalt der Zusammensetzung zwischen 2 bis 15 Gew-% beträgt.

3. Zusammensetzung nach einem der Ansprüche 1 oder 2, **dadurch gekennzeichnet dass** die Polyesterdiole der Komponente (a) Polyesterdiole mit einer zahlenmittlere Molmasse unter 2000 g/mol sind und in einer Menge von 20 bis 60 Gew-% enthalten ist.

4. Zusammensetzung nach einem der vorhergehenden Ansprüche, **dadurch gekennzeichnet, dass** Komponente (b) in einer Menge von 40 bis 80 Gew.-% enthalten ist und auf Basis von linearen Polyetherdiolen mit einer zahlenmittlere Molmasse unter 1500 g/mol hergestellt wird und zwei aromatische Isocyanatgruppen enthält.

5. Zusammensetzung nach einem der Ansprüche 1 bis 3, **dadurch gekennzeichnet, dass** die Komponente (b) zwei endständige Si(OR)₃ -Gruppen aufweist mit -OR ausgewählt aus Methoxy-, Ethoxy- oder Propoxy-, und (b) in einer Menge bis zu 40 Gew-% enthalten ist.

6. Zusammensetzung nach einem der vorhergehenden Ansprüche, **dadurch gekennzeichnet, dass** als Additive Schaumstabilisatoren, Katalysatoren, Farbstoffe oder Pigmente, Zellöffner und/oder UV-Stabilisatoren enthalten sind.

7. Zusammensetzung nach einem der vorhergehenden Ansprüche, **dadurch gekennzeichnet, dass** als Treibmittel DME oder Gemische aus DME mit C₁ bis C₅-Alkanen enthalten sind.

8. Zusammensetzung nach einem der vorhergehenden Ansprüche, **dadurch gekennzeichnet, dass** die Viskosität der Mischung der reaktiven Komponenten a und b zwischen 30000 bis 150000 mPas bei 50°C beträgt.

9. Einweg-Druckbehälter enthaltend eine Zusammensetzung nach einem der Ansprüche 1 bis 8, wobei die Viskosität der Mischung der nicht flüchtigen Bestandteile 2000 bis 150000 mPas beträgt, gemessen bei 50°C.

10. Verfahren zum Herstellen einer schäumbaren vernetzbaren Zusammensetzung nach einem der Ansprüche 1 bis 8, wobei
• entweder das Prepolymer (a) aus mindestens einem Polyesterdiol mit einem Überschuss an aromatischen Diisocyanaten im NCO/OH-Verhältnis von 2:1 bis 10:1 hergestellt wird, das nicht reagierte monomere Diisocyanat abdestilliert wird, und zu dieser Mischung eine Komponente (b) enthaltend mindestens eine Si(OR)₃-Gruppe, mit -OR ausgewählt aus Methoxy-, Ethoxy, Propoxy-, Butoxy-, oder mindestens eine NCO-Gruppe und Komponente (d) und/oder (c) zugegeben werden, **dadurch gekennzeichnet, dass** die Mischung aus (a) und (b) eine Viskosität von 30000 bis150000 mPas bei 50 °C aufweist und einen Gehalt an monomeren Diisocyanaten von weniger als 2 Gew-% aufweist.
• oder das Prepolymer (a) gemeinsam mit der Komponente (b) aus mindestens einem Polyesterdiol gemischt mit mindestens einem Polyetherdiol mit einem Überschuss an aromatischen Diisocyanaten im NCO/OH-Verhältnis von 2:1 bis 10:1 hergestellt wird, das nicht reagierte monomere Diisocyanat abdestilliert wird auf weniger als 1 Gew-%, und die Mischung zusammen mit Additiven und Treibmittel in einen Einweg-Druckbehälter gefüllt und homogenisiert wird, und die Viskosität der Mischung der nicht flüchtigen Bestandteile 2000 bis 150000 mPas beträgt ge-messen bei 50°C.

11. Verfahren nach Anspruch 10, **dadurch gekennzeichnet, dass** die Komponenten (a) und/oder (b) gemischt mit mindestens einem Treibmittel in eine Dose eingebracht werden.

12. Verfahren nach Anspruch 10 bis 11, **dadurch gekennzeichnet, dass** der NCO-Gehalt der Zusammensetzung durch Zusatz von nicht flüchtigen oligomeren/polymeren Isocyanaten erhöht wird.

13. Verwendung einer Zusammensetzung gemäß den Ansprüchen 1 bis 8 zur Herstellung von vernetzbaren Dosenschäumen.

14. Verwendung nach Anspruch 13 zur Herstellung von vernetzbaren 1-Komponenten-Dosenschäumen.

## Claims

1. A crosslinkable foamable composition with low content of monomeric isocyanates comprising
a) 10 to 90 wt % of a prepolymer of polyester diols reacted with an excess of diisocyanates and subsequent removal of the excess monomeric diisocyanate,
b) 90 to 10 wt % of a component based on polyether diols which possesses at least one Si(OR)₃ group with -OR being selected from methoxy, ethoxy, propoxy, butoxy, or at least one NCO group,
c) 0.1 to 30 wt % additives,
d) at least one blowing agent,
wherein the polyester diols and the polyether diols have a number average molecular mass (M_{N}) below 5000 g/mol and the mixture of a and b comprises a content of monomeric diisocyanates below 2 wt %.

2. The composition according to claim 1, **characterized in that** the NCO monomer content of the composition is below 1 wt % and the NCO content of the composition is between 2 and 15 wt %.

3. The composition according to one of claims 1 or 2, **characterized in that** the polyester diols of the component (a) are polyester diols with a number average molecular mass of less than 2000 g/mol and is comprised in an amount of 20 to 60 wt %.

4. The composition according to one of the previous claims, **characterized in that** component (b) is comprised in an amount of 40 to 80 wt % and is manufactured based on linear polyether diols with a number average molecular mass of less than 1500 g/mol and comprises two aromatic isocyanate groups.

5. The composition according to one of claims 1 to 3, **characterized in that** the component (b) possesses two terminal Si(OR)₃ groups with -OR selected from methoxy, ethoxy or propoxy, and (b) is comprised in an amount of up to 40 wt %.

6. The composition according to one of the previous claims, **characterized in that** foam stabilizers, catalysts, dyes or pigments, cell openers and/or UV-stabilizers are contained as the additives.

7. The composition according to one of the previous claims, **characterized in that** DME or mixtures of DME with C₁ to C₅ alkanes are contained as the blowing agent.

8. The composition according to one of the previous claims, **characterized in that** the viscosity of the mixture of the reactive components a and b is between 30 000 and 150 000 mPas at 50 °C.

9. A disposable pressure vessel comprising a composition according to one of claims 1 to 8, in which the viscosity of the mixture of the non-volatile constituents is between 2000 and 150000 mPas, measured at 50°C.

10. A process for manufacturing a foamable crosslinkable composition according to one of claims 1 to 9, wherein
• either the prepolymer (a) of at least one polyester diol is manufactured with an excess of aromatic diisocyanates in the NCO/OH ratio of 2:1 to 10:1, the unreacted monomeric diisocyanate is distilled off, and to this mixture are added a component (b) comprising at least one Si(OR)₃ group, with -OR being selected from methoxy, ethoxy, propoxy, butoxy, or at least one NCO group and component (d) and/or (c), **characterized in that** the mixture of (a) and (b) has a viscosity of 30000 to 150000 mPas at 50°C and has a content of monomeric diisocyanates of less than 2 wt %.
• or the prepolymer (a) together with component (b) of at least one polyester diol mixed with at least one polyether diol is manufactured with an excess of aromatic diisocyanates in the NCO/OH ratio of 2:1 to 10:1, the unreacted monomeric diisocyanate is distilled off to less than 1 wt %, and the mixture together with additives and blowing agent is filled into a disposable pressure container and homogenized, and the viscosity of the mixture of the non-volatile constituents is between 2000 and 150000 mPas, measured at 50°C.

11. The process according to claim 10, **characterized in that** the components (a) and/or (b) mixed with at least one blowing agent are introduced into a can.

12. The process according to claim 10 to 11, **characterized in that** the NCO content of the composition is increased by adding non-volatile oligomeric/polymeric isocyanates.

13. Use of a composition according to claims 1 to 8 for manufacturing canned crosslinkable foams.

14. Use according to claim 13 for manufacturing canned crosslinkable 1-component foams.

## Revendications

1. Composition réticulable apte à être transformée en mousse possédant une faible teneur en isocyanates monomères contenant :
a) de 10 à 90 % en poids d'un prépolymère obtenu à partir de polyesterdiols que l'on fait réagir avec un excès de diisocyanate et dont on a éliminé ensuite le diisocyanate monomère en excès ;
b) de 90 à 10 % en poids d'un composant à base de polyétherdiols qui présente soit au moins un groupe Si(OR)₃ dans lequel OR est choisi parmi un groupe méthoxy, un groupe éthoxy, un groupe propoxy, un groupe butoxy, soit au moins un groupe NCO ;
c) de 0,1 à 30 % en poids d'additifs ;
d) au moins un agent gonflant ;
les polyesterdiols et les polyétherdiols présentant une masse molaire moyenne en nombre (M_{N}) inférieure à 5000 g/mol, et le mélange de a et b possédant une teneur en diisocyanates monomères inférieure à 2 % en poids.

2. Composition selon la revendication 1, **caractérisée en ce que** la teneur de la composition en monomères NCO est inférieure à 1 % en poids et la teneur de la composition en groupes NCO se situe entre 2 et 15 % en poids.

3. Composition selon l'une quelconque des revendications 1 ou 2, **caractérisée en ce que** les polyesterdiols du composant (a) sont des polyesterdiols possédant une masse molaire moyenne en nombre inférieure à 2000 g/mol et sont contenus en une quantité de 20 à 60 % en poids.

4. Composition selon l'une quelconque des revendications précédentes, **caractérisée en ce que** le composant (b) est contenu en une quantité de 40 à 80 % en poids et est préparé à base de polyétherdiols linéaires possédant une masse molaire moyenne en nombre inférieure à 1500 g/mol et contient deux groupes isocyanates aromatiques.

5. Composition selon l'une quelconque des revendications 1 à 3, **caractérisée en ce que** le composant (b) présente deux groupes terminaux Si(OR)₃ dans lesquels OR est choisi parmi un groupe méthoxy, un groupe éthoxy ou un groupe propoxy, et (b) est contenu en une quantité s'élevant jusqu'à 40 % en poids.

6. Composition selon l'une quelconque des revendications précédentes, **caractérisée en ce que**, sont présents à titre d'additifs, des stabilisateurs des mousses, des catalyseurs, des colorants ou des pigments, des agents d'ouverture d'alvéoles et/ou des stabilisateurs du rayonnement ultraviolet.

7. Composition selon l'une quelconque des revendications précédentes, **caractérisée en ce que**, sont présents à titre d'agents gonflants, du DME ou des mélanges de DME avec des alcanes en C₁-C₅.

8. Composition selon l'une quelconque des revendications précédentes, **caractérisée en ce que** la viscosité du mélange des composants réactifs a et b se situe entre 30.000 et 150.000 mPas à 50 °C.

9. Réservoir sous pression jetable contenant une composition selon l'une quelconque des revendications 1 à 8, dans lequel la viscosité du mélange des constituants non volatils s'élève de 2.000 à 150.000 mPas, mesurée à 50 °C.

10. Procédé pour la préparation d'une composition réticulable apte à être transformée en mousse selon l'une quelconque des revendications 1 à 8, dans lequel
• soit on prépare le prépolymère (a) à partir d'au moins un polyesterdiol comprenant un excès de diisocyanates aromatiques dans le rapport NCO/OH de 2:1 à 10:1, on élimine par distillation le diisocyanate monomère n'ayant pas réagi, et on ajoute à ce mélange un composant (b) contenant au moins un groupe Si(OR)₃ dans lequel OR est choisi parmi un groupe méthoxy, un groupe éthoxy, un groupe propoxy, un groupe butoxy, ou au moins un groupe NCO, ainsi que les composants (d) et/ou (c), **caractérisé en ce que** le mélange de (a) et (b) présente une viscosité de 30.000 à 150.000 mPas à 50 °C et présente une teneur en diisocyanates monomères inférieure à 2 % en poids ;
• soit on prépare le prépolymère (a) de manière conjointe avec le composant (b) à partir d'au moins un polyesterdiol mélangé avec au moins un polyétherdiol comprenant un excès de diisocyanates aromatiques dans le rapport NCO/OH de 2:1 à 10:1, on élimine par distillation le diisocyanate monomère n'ayant pas réagi jusqu'à obtenir une valeur inférieure à 1 % en poids, on remplit un réservoir sous pression jetable avec le mélange conjointement avec des additifs et des agents gonflants et on homogénéise, la viscosité du mélange des constituants non volatils s'élevant de 2.000 à 150.000 mPas, mesurée à 50 °C.

11. Procédé selon la revendication 10, **caractérisé en ce qu'**on introduit les composants (a) et/ou (b) en mélange avec au moins un agent gonflant dans une boîte.

12. Procédé selon les revendications 10 à 11, **caractérisé en ce qu'**on élève à une teneur de la composition en groupes NCO par addition d'isocyanates oligomère/polymères non volatils.

13. Utilisation de la composition selon les revendications 1 à 8 pour la préparation de mousses réticulables en boîte.

14. Utilisation selon la revendication 13 pour la préparation de mousses réticulables en boîte à un seul composant.
